# EUROPÄISCHE PATENTSCHRIFT

(11) **EP 1 866 564 B1**
(45) Veröffentlichungstag und Bekanntmachung des Hinweises auf die Patenterteilung: **29.08.2012**
(21) Anmeldenummer: 06707518.4
(22) Anmeldetag: 10.03.2006
(51) Int. Cl.: F16L 37/091, F16L 37/098

(54) **ANSCHLUSSVORRICHTUNG FÜR EINE FLUIDLEITUNG**
CONNECTING DEVICE FOR A FLUID LINE
DISPOSITIF DE RACCORDEMENT POUR UNE CONDUITE DE FLUIDE

(30) Priorität: 07.04.2005 DE 102005017692
(43) Veröffentlichungstag der Anmeldung: 19.12.2007
(73) Patentinhaber: FESTO AG & Co. KG, 73734 Esslingen (DE)
(72) Erfinder: STOLL, Kurt, 73732 Esslingen (DE); KEES, Ulrich, 66424 Homburg (DE); RÖHRIG, Harald, 66583 Spiesen-Elversberg (DE)
(74) Vertreter: Abel, Martin
(86) Internationale Anmeldenummer: PCT/EP2006/002218
(87) Internationale Veröffentlichungsnummer: WO 2006/105849

(56) Entgegenhaltungen:
- DE-A1- 10 114 326
- DE-A1- 10 335 530
- FR-A- 2 622 273
- US-A- 4 181 329
- US-A1- 2002 135 184

## Beschreibung

Die Erfindung betrifft eine Anschlussvorrichtung für eine Fluidleitung, mit einem zur Steckmontage in einer kreiszylindrischen Aufnahme eines Trägerbauteils dienenden, ring- oder hülsenförmigen Einsatz, der mehrere in seiner Umfangsrichtung verteilte, nach radial innen ragende federelastische Krallenelemente für die umfangsseitige Beaufschlagung einer eingesteckten Fluidleitung sowie die Krallenelemente axial überragende Abstützmittel für eine die eingesteckte Fluidleitung umschließende ringförmige Dichtung aufweist, wobei der Einsatz ein als metallisches Stanzbiegeteil ausgeführtes, ring- oder hülsenförmiges Käfigelement enthält, das einen ringförmigen Tragabschnitt aufweist, ausgehend von dem zur gleichen Axialseite zum einen die Abstützmittel bildende Stützbeine und zum anderen die Krallenelemente wegragen, die jeweils einstückig mit dem Tragabschnitt ausgebildet sind. Eine solche vorrichtung ist aus US 2002/135184 A1 bekannt.

Eine aus der EP 1 209 404 A1 bekannte Anschlussvorrichtung dieser Art enthält einen zylindrischen Einsatz für die Steckmontage in einer kreiszylindrischen Aufnahme eines Trägerbauteils, beispielsweise des Gehäuses einer fluidtechnischen Komponente. Zur Fixierung innerhalb der Aufnahme sind vom Einsatz radial abstehende Verankerungsvorsprünge vorgesehen, die sich in die Wandung der Aufnahme eindrücken können. Zur lösbaren Fixierung einer eingesteckten Fluidleitung ist an dem Einsatz ein mehrere Krallenelemente aufweisender gesonderter Ringkörper befestigt. Die Krallenelemente werden nach axial innen hin von in Gestalt eines Ringkörpers ausgebildeten Abstützmitteln überragt, die zur Abstützung einer aufgesteckten oder angeformten ringförmigen Dichtung dienen, die von der eingesteckten Fluidleitung durchgriffen wird. Ungeachtet der funktionellen Vorteile erweist sich bei dieser bekannten Anschlussvorrichtung die relativ große Anzahl von Bauteilen als Nachteil in Bezug auf die Fertigungskosten.

Die US 2002/135184 A1 beschreibt eine Anschlussvorrichtung, bei der gemäß den eingangs genannten Merkmalen ein Einsatz einen ringförmigen Tragabschnitt aufweist, von dem sowohl Stützbeine als auch zur Fixierung einer Fluidleitung dienende Krallenelemente wegragen. Der Tragabschnitt hat eine kreisförmige Umfangskontur.

Aus der US 5 029 908 ist es bereits bekannt, die Krallenelemente einer Anschlussvorrichtung als Komponenten eines Stanzbiegeteils auszuführen. Es handelt sich hier um eine Bauform, bei der die Krallenelemente Bestandteil eines ringförmigen Stanzbiegeteils sind, das an einem Betätigungsring fixiert ist, der axial verlagert werden kann, wenn eine eingesteckte Fluidleitung wieder entnommen werden soll. Das Stanzbiegeteil ist hier allerdings kein Bestandteil eines in einer Aufnahme fixierten Einsatzes und übernimmt auch keine Abstützfunktion in Bezug auf die axial vorgelagerte Dichtung.

Als Hauptaufgabe, die mit der vorliegenden Erfindung gelöst werden soll, wird angesehen, eine funktionell zuverlässige Anschlussvorrichtung zu schaffen, die sich mit geringem Herstellungsaufwand fertigen lässt.

Zur Lösung dieser Aufgabe ist vorgesehen, dass der Tragabschnitt eine mehreckige Umfangskontur mit zwischen den Eckabschnitten verlaufenden Flachabschnitten aufweist.

Das Käfigelement des Einsatzes vereinigt in sich sowohl die zur Fixierung der Fluidleitung dienenden Krallenelemente als auch die zur Abstützung der ringförmigen Dichtung dienenden Abstützmittel, wobei letztere als individuelle Stützbeine ausgebildet sind, die wie die Krallenelemente einstückig mit einem ringförmigen Tragabschnitt des Käfigelements verbunden sind und von diesem wegragen. In Verbindung mit der Realisierung als metallisches Stanzbiegeteil kann das Käfigelement mit seinen Komponenten sehr einfach durch einen kombinierten Stanz- und Biegevorgang hergestellt werden. Trotz geringer Materialstärke erreicht man hierbei sowohl ausreichende Steifigkeit im Bereich der Stützbeine als auch die angestrebte Federelastizität im Bereich der Krallenelemente. In vorteilhafter Weise besitzt der Tragabschnitt eine mehreckige Umfangskontur mit zwischen den Eckabschnitten verlaufenden Flachabschnitten. Die Mehreckkontur des ringförmigen Tragabschnittes erleichtert den bei der Formgebung angewandten Biegevorgang und definiert klar voneinander abgegrenzte Bereiche für die Platzierung der Krallenelemente und der Stützbeine ohne gegenseitige Beeinträchtigung der diesen Komponenten zugeordneten Funktionen.

Vorteilhafte Weiterbildungen der Erfindung gehen aus den Unteransprüchen hervor.

Bei einer zweckmäßigen Ausgestaltung ist vorgesehen, dass die Krallenelemente von den Flachabschnitten und die Stützbeine von den Eckabschnitten ausgehen oder umgekehrt. Hierbei wird es als besonders vorteilhaft angesehen, wenn die Krallenelemente von den Flachabschnitten des Tragabschnittes ausgehen, weil hier ein besonders gutes elastisches Verformungsvermögen gewährleistet werden kann. Die mit den Stützbeinen versehenen Eckabschnitte hingegen garantieren eine erhöhte Steifigkeit, was für die Abstützfunktion der Stützbeine von Vorteil ist. Gleichwohl wäre es prinzipiell auch möglich, eine umgekehrte Anordnung zu treffen, sodass die Krallenelemente von den Eckabschnitten und die Stützbeine von den Flachabschnitten ausgehen.

Die Herstellung des Käfigelementes gestaltet sich besonders einfach, wenn sowohl die Krallenelemente als auch die Stützbeine von den Flachabschnitten ausgehen. Hierbei ist vorzugsweise in der Umfangsrichtung des Käfigelementes eine alternierende Anordnung von Krallenelementen und Stützbeinen vorgesehen.

Bevorzugt sind die Eckabschnitte des Tragabschnittes abgerundet. Der Biegeradius kann hierbei im Wesentlichen dem Radius der zur Aufnahme des Einsatzes vorgesehenen Ausnehmung entsprechen. Durch die Abrundung kann auch eine verbesserte Querabstützung des Einsatzes innerhalb der Ausnehmung gewährleistet werden. Außerdem erreicht man durch die Abrundung eine größere Breite der Eckabschnitte, sodass die dort eventuell abgehenden Stützbeine oder Krallenelemente relativ problemlos ohne Längsknick ausgeführt werden können und man in der Regel beim Biegen der mehreckigen Ringform des Käfigelementes den Biegevorgang auf den Tragabschnitt beschränken kann, ohne Einbeziehung der Stützbeine bzw. Krallenelemente.

Letzteres gilt entsprechend auch für die sich an die Flachabschnitte anschließenden Krallenelemente oder Stützbeine. Schließen sich die Krallenelemente an die Flachabschnitte an, kann somit eine praktisch lineare Biegezone definiert werden, die das federelastische Verformungsverhalten der Krallenelemente begünstigt.

Die stirnseitigen Ränder der Krallenelemente weisen zweckmäßigerweise eine konkave Bogenform auf, die von zwei Spitzen begrenzt ist. Hierdurch kann eine optimale Anpassung an die Formgebung der festzuhaltenden Fluidleitung erzielt werden. Besonders vorteilhaft ist hierbei eine Gestaltung, bei der der Radius der Konkavität geringer ist als der Außenradius der zu haltenden Fluidleitung. Dies führt bei Anlage der stirnseitigen Ränder an der Fluidleitung zu einer exponierten Gestaltung der beiden Spitzen eines jeweiligen Krallenelementes, die sich mithin schon mit geringem Kraftaufwand in die Wandung der zu haltenden Fluidleitung eingraben können. Verfügt das Käfigelement beispielsweise über sechs Krallenelemente, resultiert daraus eine sehr zuverlässige 12-Punkt-Schlauchfixierung.

Die in der Umfangsrichtung des Käfigelements vorzugsweise abwechselnd mit den Krallenelementen angeordneten Stützbeine besitzen zweckmäßigerweise jeweils einen vom Tragabschnitt ausgehenden Schenkelabschnitt mit bevorzugt linearer axialer Erstreckung und daran anschließend radial nach innen ragendem Fußabschnitt, wobei letzterer zur Abstützung der zugeordneten ringförmigen Dichtung dient. Die Grundfläche der Fußabschnitte kann jeweils eine Abstützfläche bilden, die an der koaxial vorgelagerten ringförmigen Dichtung anliegt, sodass diese zwischen den Stützbeinen und einer Abstufung innerhalb der kreiszylindrischen Aufnahme axial gefangen ist. Es besteht auch die Möglichkeit die ringförmige Dichtung an den Stützbeinen zu befestigen, sodass sie einen Bestandteil des Einsatzes darstellt. Dies kann beispielsweise durch eine stoffschlüssige Verbindung erreicht werden, indem die Dichtung beispielsweise an die Stützbeine angeklebt oder durch Spritzgießen daran angeformt wird.

Dadurch, dass die Stützbeine die Krallenelemente axial überragen, können die Fußabschnitte der Stützbeine ohne Beeinträchtigung der Haltefunktion der Krallenelemente in praktisch beliebiger Breite ausgeführt werden. Hierbei können sich die Krallenelemente und die Fußabschnitte der Stützbeine in zueinander beabstandeten Radialebenen ohne weiteres in Umfangsrichtung des Käfigelementes überlappen.

Es besteht ferner die vorteilhafte Möglichkeit, die Stützbeine so auszubilden, dass nur einige von Ihnen mit ihrem Fußabschnitt eine unmittelbare Abstützung der vorgelagerten ringförmigen Dichtung bewirken. In diesem Fall können die direkt abstützend wirkenden Fußabschnitte in der Umfangsrichtung des Käfigelementes eine dahingehende Breite aufweisen, dass sie den Fußabschnitt eines oder beider in der Umfangsrichtung benachbarten Stützbeine untergreifen. Somit kann eine in der Umfangsrichtung eine relativ große Erstreckung aufweisende zusammenhängende Abstützfläche gewährleistet werden, mit optimierter Abstützung der ringförmigen Dichtung. Die untergriffenen Fußabschnitte bewirken zweckmäßigerweise auch weiterhin eine Abstützung der ringförmigen Dichtung, nun aber nicht mehr unmittelbar, sondern mittelbar durch Abstützung der sie untergreifenden benachbarten Fußabschnitte. Hierbei besteht die Möglichkeit, die Anordnung so zu treffen, dass die mit einem benachbarten Fußabschnitt zusammenwirkenden Stützbeine gleichzeitig von zwei Fußabschnitten untergriffen werden und somit eine gleichzeitige Abstützung zweier Fußabschnitte bewirken. Die mit vergrößerter Breite ausgeführten Fußabschnitte können insbesondere die Gestalt von Ringsegmenten haben, wobei sich insbesondere eine sich insgesamt zu einer Ringkonfiguration ergänzenden Dreifachanordnung von Ringsegmenten mit einer Bogenlänge von jeweils etwa 120° empfiehlt.

Dem Käfigelement sind zweckmäßigerweise Verankerungsmittel zugeordnet, die dafür sorgen, dass der Einsatz nicht mehr aus der Ausnehmung herausgezogen werden kann. Dabei sind die Verankerungsmittel bevorzugt als unmittelbarer Bestandteil des Einsatzes ausgebildet. Sie können beispielsweise einen ringförmigen Verankerungsvorsprung oder mehrere über den Umfang verteilte einzelne Verankerungsvorsprünge aufweisen, der bzw. die sich bei der Steckmontage der Anschlussvorrichtung in die Wandung der Ausnehmung des Trägerkörpers eingraben und einem Herausziehen widersetzen kann bzw. können.

Bei einer als besonders vorteilhaft angesehenen Bauform ist der mindestens eine Verankerungsvorsprung Bestandteil eines bezüglich dem Käfigelement gesonderten Verankerungsringes, der in koaxialer Zuordnung mit dem Käfigelement zu einer Baueinheit zusammengefasst ist. Der Verankerungsring kann mehrere entlang seines Umfanges verteilte Verbindungslaschen besitzen, die axial in das Käfigelement eintauchen und bezüglich diesem fixiert werden.

Die Verbindungslaschen können ösenartig gestaltet sein, wobei sie durch am Käfigelement ausgebildete Haltezungen gehalten werden, die in die Durchbrechungen der Verbindungslaschen eingebogen wurden.

Ein einfacherer Zusammenbau von Käfigelement und Verankerungsring ist gewährleistet, wenn der axial an das Käfigelement angesteckte Verankerungsring mit in das Käfigelement eintauchenden Verbindungslaschen durch eine Rastverbindung am Käfigelement fixiert ist.

Bei dem Trägerbauteil kann es sich beispielsweise um die Wandung eines fluidtechnischen Bauteils handeln, beispielsweise eines Ventils oder eines fluidbetätigten Antriebes. Ein gesonderter Gehäusekörper zur Definition der kreiszylindrischen Aufnahme erübrigt sich dadurch. Alternativ kann als Trägerbauteil jedoch auch ein gesonderter, individueller Gehäusekörper vorgesehen sein, der mit Anschlussmitteln, beispielsweise ein Anschlussgewinde, ausgestattet ist, die die Befestigung an einer dafür vorgesehenen Schnittstelle eines fluidtechnischen Bauteils ermöglichen.

Nachfolgend wird die Erfindung anhand zweier Ausführungsbeispiele auf der Grundlage der beiliegenden Zeichnungen näher erläutert, wobei die Figuren 1 bis 8 ein erstes und die Figuren 9 bis 17 ein zweites Ausführungsbeispiel illustrieren. Im Einzelnen zeigen:
- Figuren 1 und 9: die beiden Ausführungsbeispiele der erfindungsgemäßen Anschlussvorrichtung im Längsschnitt mit einer Schnittebene gemäß Schnittlinie I-I aus Figuren 3 und 5 beim Ausführungsbeispiel der Figur 1 und mit einer Schnittebene gemäß Schnittlinie IX-IX aus Figuren 11 und 13 beim Ausführungsbeispiel der Figur 9, das Ganze jeweils im in einer kreiszylindrischen Aufnahme eines Trägerbauteils betriebsbereit installierten Zustand, wobei strichpunktiert eine angeschlossene Fluidleitung dargestellt ist,
- Figuren 2 und 10: das in Figuren 1 und 9 markierte Detail II bzw. Detail X in vergrößerter Darstellung,
- Figuren 3 und 11: eine Einzeldarstellung der jeweiligen Anschlussvorrichtung in einer Seitenansicht,
- Figuren 4 und 12: die Anschlussvorrichtungen in ihre Komponenten zerlegt, teilweise im Längsschnitt, und zwar gemäß Schnittlinien IVa -IVa aus Figur 6 und IVb-IVb aus Figur 5 beim ersten Ausführungsbeispiel und gemäß Schnittlinie XII-XII aus Figur 14 und IX-IX aus Figur 13 beim zweiten Ausführungsbeispiel, jeweils ohne Abbildung der zugeordneten Dichtung,
- Figuren 5 und 13: einen Querschnitt durch die Anordnungen aus Figuren 1 und 9 gemäß den dortigen Schnittlinien V-V bzw. XIII-XIII ohne Abbildung der Lösehülse und des Verankerungsringes,
- Figuren 6 und 14: eine Draufsicht auf den Verankerungsring mit Blickrichtung gemäß Pfeil VI aus Figur 4 bzw. Pfeil XIV aus Figur 12,
- Figuren 7 und 15: eine perspektivische Einzeldarstellung des jeweiligen Käfigelementes mit Blick auf die bezogen auf den Einbauzustand äußere Axialseite,
- Figuren 8 und 16: eine weitere perspektivische Einzeldarstellung der Käfigelemente mit Blick auf die im Einbauzustand innere Axialseite, und
- Figur 17: ein vergrößertes, teilweise aufgebrochenes Detail gemäß dem Ausschnitt XVII in Figur 11.

Die nachfolgende detaillierte Bes-chreibung bezieht sich gleichzeitig auf beide Ausführungsbeispiele, sofern im Einzelfall nichts anderes erwähnt ist.

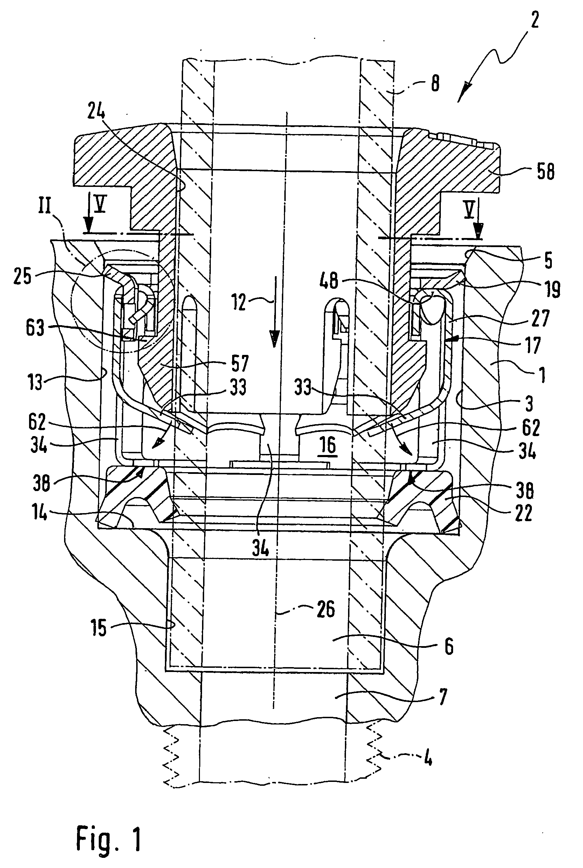

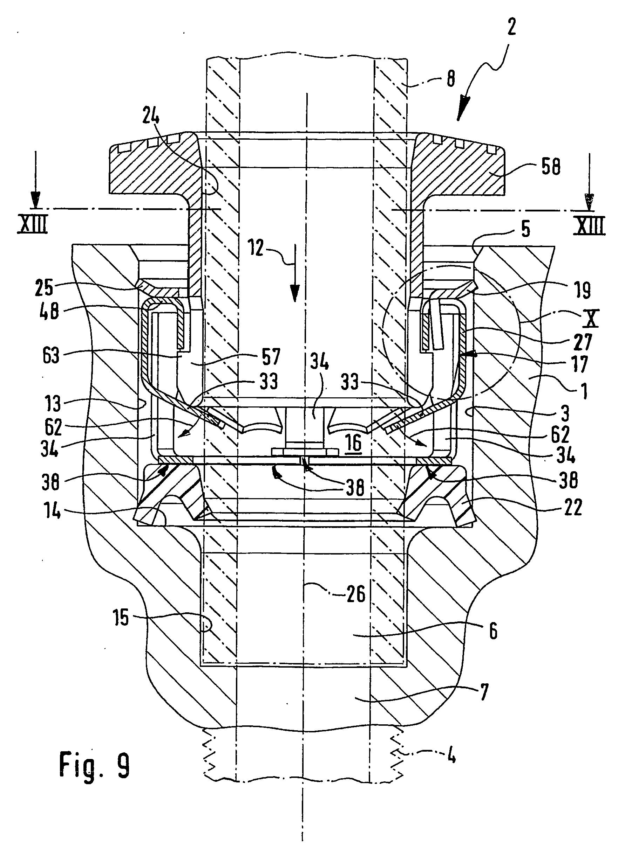

Die Figuren 1 und 9 zeigen den Ausschnitt eines Trägerbauteils 1, das mit einer erfindungsgemäßen Anschlussvorrichtung 2 bevorzugten Aufbaus bestückt ist. Bei dem Trägerbauteil 1 handelt es sich um die Wandung des Gehäuses einer fluidtechnischen Komponente, beispielsweise eines Ventils, eines fluidbetätigten Antriebes, eines Druckluft-Wartungsgerätes oder eines Druckluftspeichers, wobei diese Aufzählung als nicht abschließend anzusehen ist.

Das Trägerbauteil 1 ist mit einer kreiszylindrischen, bevorzugt mindestens einmal im Durchmesser abgestuften Aufnahme 3 versehen, in die die Anschlussvorrichtung 2 axial unbeweglich eingesteckt ist. Somit können fluidtechnische Komponenten mit der Anschlussvorrichtung 2 ausgerüstet werden, ohne dass es für diese eines gesonderten Gehäuses bedürfte.

Das Trägerbauteil 1 kann jedoch bei Bedarf auch von vorne herein ein fester Bestandteil der Anschlussvorrichtung 2 sein. In diesem Fall handelt es sich bei dem Trägerbauteil 1 zweckmäßigerweise um einen individuellen Gehäusekörper, der eine mit der Anschlussvorrichtung 2 bestückte Aufnahme 3 aufweist und der außerdem über strichpunktiert angedeutete Anschlussmittel 4 verfügt, über die eine Befestigung an einer daran angepassten Schnittstelle einer fluidtechnischen Komponente möglich ist. Die Anschlussmittel 4 können hier beispielsweise einen Einsteckstutzen oder einen Gewindestutzen bilden.

Die Aufnahme 3 ist an ihrem äußeren axialen Ende 5 zu einer Außenfläche des Trägerbauteils 1 hin offen. Im Bereich ihres inneren axialen Endes 6 geht sie in einen weiterführenden Fluidkanal 7 des Trägerbauteils 1 über.

Die in der Aufnahme 3 fixierte Anschlussvorrichtung 2 ermöglicht die Herstellung einer fluidischen Verbindung zwischen einer strichpunktiert angedeuteten starren oder flexiblen Fluidleitung 8 und dem Fluidkanal 7. Beim Anschlussvorgang wird die Fluidleitung 8 in einer Einsteckrichtung 12 in die Anschlussvorrichtung 2 eingeführt, in der sie dann, bevorzugt lösbar, gehalten ist.

Die Aufnahme 3 ist in ihrer Längsrichtung abgestuft und enthält einen sich an das äußere axiale Ende 5 anschließenden Aufnahmeabschnitt 13 größeren Durchmessers, an den sich über eine radiale Abstufung 14 ein Zentrierabschnitt 15 kleineren Durchmessers anschließt. Die Anschlussvorrichtung 2 sitzt in dem Aufnahmeabschnitt 13. Die angeschlossene Fluidleitung 8 durchsetzt die Anschlussvorrichtung 2 und taucht mit ihrem Endabschnitt in den Zentrierabschnitt 15 ein, dessen Durchmesser dem Außendurchmesser der Fluidleitung 8 entspricht oder geringfügig größer ist.

Die Anschlussvorrichtung 2 verfügt über einen einen axialen Durchgang 16 aufweisenden, ring- oder hülsenförmigen Einsatz 17, der im Rahmen einer Steckmontage in der Aufnahme 3 festlegbar ist. Bei dieser Steckmontage wird der Einsatz 17 unter Aufbringung einer gewissen Montagekraft koaxial in der Einsteckrichtung 12 in die Aufnahme 3 eingepresst. Der Einsatz 17 umfasst ein als metallisches Stanzbiegeteil ausgeführtes ring- oder hülsenförmiges Käfigelement 18 und einen mit diesem in koaxialer Zuordnung zu einer Baueinheit zusammengefassten gesonderten Verankerungsring 19. Der Verankerungsring 19 ist an der dem äußeren axialen Ende 5 zugewandten Endbereich des Käfigelementes 18 platziert und zweckmäßigerweise ebenfalls als metallisches Stanzbiegeteil ausgeführt.

Axial innen an das Käfigelement 18 schließt sich eine koaxial angeordnete ringförmige Dichtung 22 an. Sie stützt sich axial innen an der Abstufung 14 der Aufnahme 3 ab und wird axial außen von dem Käfigelement 18 beaufschlagt. Beim Ausführungsbeispiel ist sie ein gesondertes, von dem Einsatz 17 unabhängiges Bauteil. Sie kann jedoch ohne weiteres in den Einsatz 17 integriert werden, indem sie an dem Käfigelement 18 befestigt wird.

Die Dichtung 22 dient der Abdichtung zwischen der eingesteckten Fluidleitung 8 und dem Trägerbauteil 1. Sie liegt ringsum am Außenumfang der eingesteckten Fluidleitung 8 und am Innenumfang des Aufnahmeabschnittes 13 an. Bevorzugt handelt es sich bei ihr um einen Lippendichtring mit je einer Dichtlippe für die beiden vorgenannten Abdichtfunktionen.

Als weitere Komponente der Anschlussvorrichtung 2 ist zweckmäßigerweise eine Lösehülse 23 vorhanden, die koaxial in den Einsatz 17 eingreift und bezüglich diesem axial beweglich ist. Sie besitzt einen zu dem axialen Durchgang 16 koaxialen Hülsendurchgang 24 mit geringfügig größerem Durchmesser als die Fluidleitung 8, die die Lösehülse 23 durchsetzt.

Der maximale Außendurchmesser des Einsatzes 17 ist an jeder Stelle seines Umfanges gleich oder geringfügig kleiner als der Innendurchmesser des Aufnahmeabschnittes 13. Abweichend hiervon hat der Verankerungsring 19 einen im Vergleich zum Innendurchmesser des Aufnahmeabschnittes 13 geringfügig größeren Außendurchmesser, und er definiert einen radial außen liegenden, bevorzugt scharfkantigen ringförmigen Verankerungsvorsprung 25, der sich im in die Aufnahme 3 eingesteckten Zustand in die Wandung der Aufnahme 3 hineindrücken kann. Daraus resultiert eine kombiniert kraft- und formschlüssige Fixierung bezüglich dem Trägerbauteil 1, und zwar unabhängig vom Material des letzteren. Der notwendige axiale Halt ist sowohl bei einem aus Metall als auch bei einem aus Kunststoffmaterial bestehenden Trägerbauteil 1 gewährleistet.

An Stelle des ringförmigen Verankerungsvorsprunges 25 könnte der Verankerungsring 19 auch mehrere entlang seines Umfanges verteilte einzelne Verankerungsvorsprünge aufweisen. Von Vorteil ist jedoch jeweils, wenn der oder die Verankerungsvorsprünge entlang einer einzigen, zur Längsachse 26 der Aufnahme 3 koaxialen Kreislinie mit der Wandung der Aufnahme 3 in Eingriff stehen.

Durch den axial unbeweglich fixierten Verankerungsring 19 wird auch das nachgeordnete Käfigelement 18 und mithin der gesamte Einsatz 17 im wesentlichen axial unbeweglich in der Aufnahme 3 fixiert.

Das Käfigelement 18 ist durch Stanzen und Biegen aus metallischem Flachmaterial hergestellt, insbesondere aus Edelstahl. Dabei wird zunächst aus einem Flachmaterial ein flacher Rohling ausgestanzt, der eine Abwicklung des Käfigelementes 18 mit allen seinen Strukturen darstellt. Anschließend werden die einzelnen Komponenten gebogen und das Käfigelement 18 insgesamt zu seiner Ring- bzw. Hülsengestalt umgeformt. Dabei verbleibt an einer Stelle des Umfanges des Käfigelementes 18 eine Unterbrechung 21, die zweckmäßigerweise offen bleibt, bei Bedarf jedoch auch durch Verschweißen geschlossen sein kann.

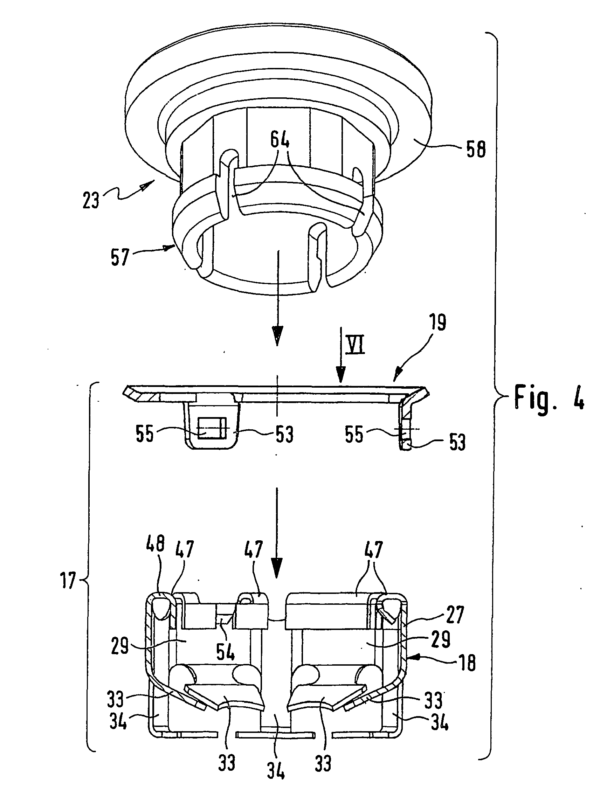

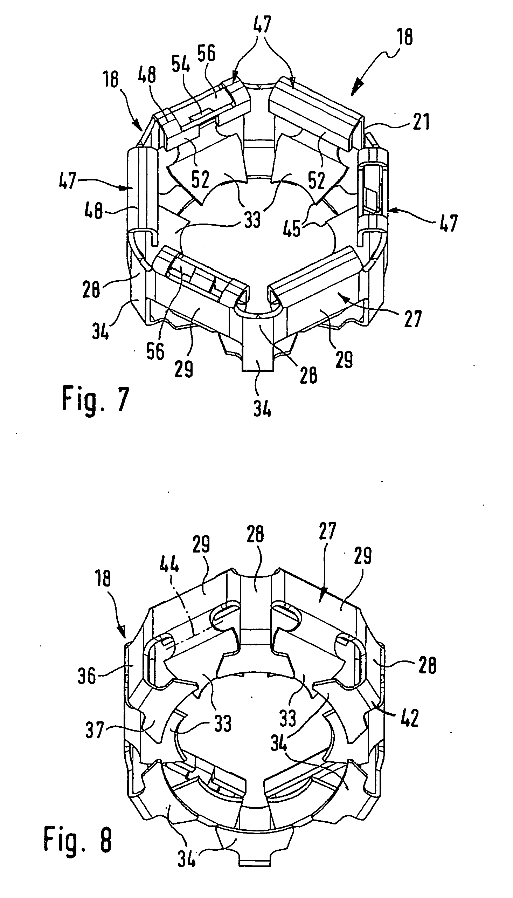

Das Käfigelement 18 besitzt einen ringförmigen, bandartig schmalen Tragabschnitt 27 mit einer mehreckigen Umfangskontur. Beim Ausführungsbeispiel der Figuren 1 bis 8 handelt es sich um eine sechseckige Gestaltung.

Zwischen den einzelnen Eckabschnitten 28 des Tragabschnittes 27 verlaufen jeweils lineare Flachabschnitte 29. Die Eckenbereiche 28 sind bevorzugt abgerundet, sodass sie sich nicht auf eine Kante beschränken, sondern in der Umfangsrichtung des Käfigelementes 18 eine gewisse Ausdehnung zumindest mit zumindest partiell gewölbtem Verlauf aufweisen.

Eine die Außenkontur sämtlicher Eckabschnitte 28 beinhaltende Kreislinie 32 hat einen Durchmesser gleich oder geringfügig kleiner wie der Innendurchmesser des kreiszylindrischen Aufnahmeabschnittes 13. Im Bereich der Flachabschnitte 29 ist das Käfigelement 18 jeweils sekantenartig bezüglich der Wandung der Aufnahme 3 radial nach innen zurückversetzt.

Wie sich gezeigt hat, lassen sich bei einer solchen Mehrkant-Formgebung die Fertigungstoleranzen leichter einhalten als bei einer prinzipiell ebenfalls möglichen kreisförmigen Außenkontur, was sich positiv auf die Herstellungskosten auswirkt.

Das Käfigelement 18 ist ein einstückiges Bauteil. Es beinhaltet außer dem Tragabschnitt 27 unter anderem auch noch mehrere Krallenelemente 33 und Stützbeine 34, die einstückig mit dem Tragelement 27 verbunden sind und sich an diesem - bezogen auf den Einbauzustand der Anschlussvorrichtung 2 - axial innen anschließen.

Beim Ausführungsbeispiel der Figuren 1 bis 8 geht von jedem Flachabschnitt 29 ein schräg nach axial innen und zugleich nach radial innen verlaufendes Krallenelement 33 ab. An jeden Eckabschnitt 28 schließt sich ein Stützbein 34 an, das die Krallenelemente 33 axial überragt.

Abweichend von diesem vorgenannten Ausführungsbeispiel wäre es auch möglich, die Stützbeine 34 von den Flachabschnitten 29 und die Krallenelemente 33 von den Eckabschnitten 28 ausgehen zu lassen.

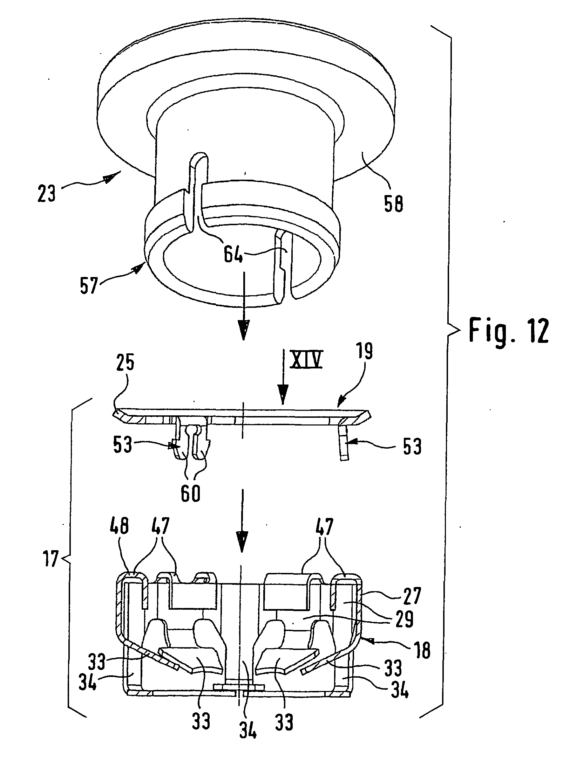

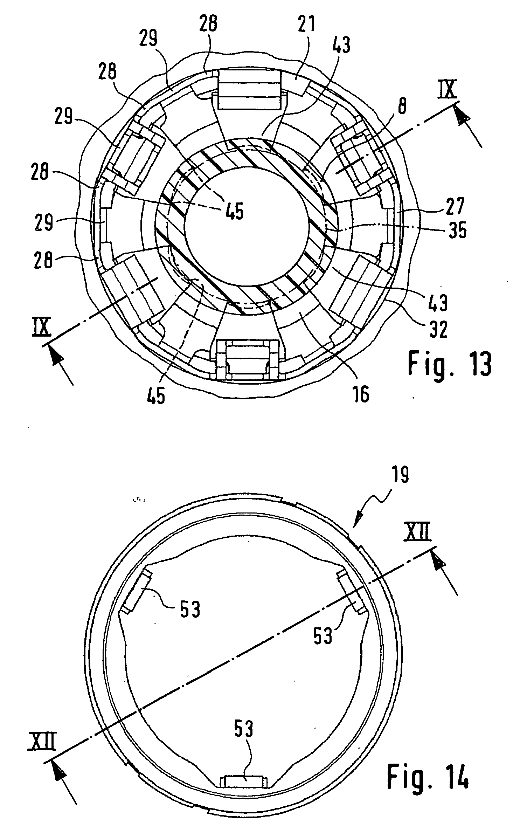

Beim Ausführungsbeispiel der Figuren 9 bis 17 gehen sowohl die Krallenelemente 33 als auch die Stützbeine 34 von den Flachabschnitten 29 des Tragabschnittes 27 aus. Die dazwischen angeordneten Eckabschnitte 28 tragen weder Krallenelemente 33 noch Stützbeine 34. Dies vereinfacht das Biegen des Käfigelementes 18 in die mehreckige Ringform, weil weder die Krallenelemente 33 noch die Stützbeine 34 mit umgebogen werden müssen. Der die Ringform hervorrufende Biegevorgang kann sich auf die bevorzugt eine nur geringe axiale Länge äufweisenden Eckabschnitte beschränken.

Auch wenn sowohl die Krallenelemente 33 als auch die Stützbeine 34 an den Flachabschnitten 29 angeordnet sind, empfiehlt sich eine in der Umfangsrichtung des Tragabschnittes 27 abwechselnde Reihenfolge dieser Bestandteile. Auf jedes Krallenelement 33 folgt also ein Tragabschnitt 27, auf den wiederum ein Krallenelement 33 folgt, usw. Mit dieser regelmäßigen Anordnung ist ein optimales Festhalten sowohl der eingesteckten Fluidleitung 8 als auch der ringförmigen Dichtung 22 gewährleistet.

Da sie nicht um eine längsverlaufende Kante abgebogen werden müssen, können sowohl die Krallenelemente 33 als auch die Stützbeine 34 jeweils Flachgestalt besitzen, was sich wiederum vorteilhaft auf die Herstellungskosten auswirkt.

Unter den einzelnen Flachabschnitten 29 können sich auch solche befinden, von denen weder ein Krallenelemente 33 noch ein Stützbein 34 ausgeht. Man hat also insgesamt eine freie Auswahl hinsichtlich der Verteilung von Krallenelementen 33 und Stützbeinen 34.

Die Krallenelemente 33 haben auf Grund ihrer geometrischen Formgebung und der Materialwahl federelastische Eigenschaften. Sie sind derart verformbar, dass die von ihren auf gleicher axialer Höhe liegenden freien Endabschnitte umgrenzte Kreislinie 35 ihren Durchmesser ändert.

Bei nicht eingesteckter Fluidleitung 8 nehmen die Krallenelemente 33 einen unverformten Ausgangszustand ein, in dem der Durchmesser der Kreislinie 35 ein Minimum aufweist, das geringer ist als der Außendurchmesser der Fluidleitung 8. Beim Einstecken der Fluidleitung 8 trifft diese mit ihrer Stirnseite die axial nach außen gewandte schräge Rückseite der Krallenelemente 33, die bei weiterem Einschieben der Fluidleitung 8 nach außen gebogen bzw. auseinandergespreizt werden, wobei sich der Durchmesser der Kreislinie 35 bis zum Außendurchmesser der Fluidleitung 8 erweitert. Nachdem die Fluidleitung 8 durch die Krallenelemente 33 hindurchgetreten ist, beaufschlagen diese die Fluidleitung 8 am Außenumfang, sodass sie nicht mehr ohne weiteres herausgezogen werden kann.

Die Stützbeine 34 repräsentieren Abstützmittel, die den Zweck haben, die ringförmige Dichtung 22 an Ort und Stelle axial zu fixieren. Bei beiden Ausführungsbeispielen enthalten sie jeweils einen sich an den Tragabschnitt 27 anschließenden, linear nach axial innen verlaufenden Schenkelabschnitt 36 und einen sich über eine Biegung daran anschließenden, nach radial innen ragenden plattenartigen Fußabschnitt 37. Der Fußabschnitt 37 besitzt zweckmäßigerweise eine größere Breite als der Schenkelabschnitt 36, wobei seine axial vom Tragabschnitt 27 wegweisende Grundfläche eine Abstützfläche 38 zur Abstützung der koaxial vorgelagerten ringförmigen Dichtung 22 bildet. Die Dichtung 22 ist dadurch an entlang ihres Umfanges verteilten Stellen mehrmals axial abstützbar.

Die Fußabschnitte 37 ragen nur so weit radial nach innen, dass eine ungehinderte Durchführung der Fluidleitung 8 gewährleistet ist.

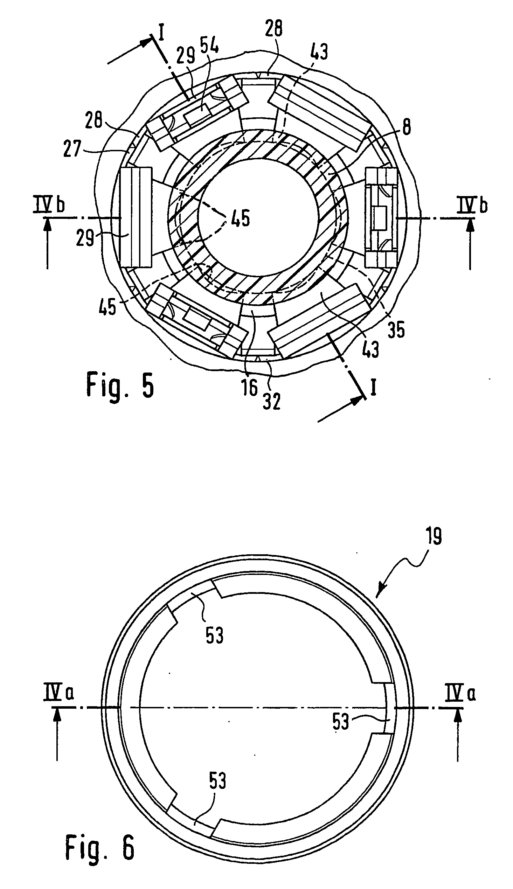

Dadurch, dass die Fußabschnitte 37 bezüglich dem Krallenelement 33 axial tiefer in der Aufnahme 3 angeordnet sind, können sie ungeachtet ihrer in der Umfangsrichtung des Käfigelementes 18 gewählten Breite die Schwenkbarkeit der Krallenelemente 33 nicht beeinträchtigen. Auf Grund der axial gestaffelten Anordnung der Krallenelemente 33 und der Fußabschnitte 37 können sich diese Komponenten ohne weiteres in der Umfangsrichtung des Käfigelementes 18 überlappen. Diese Überlappung ist aus Figuren 5 und 8 sowie Figuren 13 und 16 gut zu erkennen.

Das Ausführungsbeispiel der Figuren 1 bis 8 macht deutlich, dass die Fußabschnitte 37 sämtlicher Stützbeine 34 zur unmittelbaren Beaufschlagung der ihnen axial vorgelagerten ringförmigen Dichtung 22 ausgebildet sein können. Sie sind hier so angeordnet, dass ihre Abstützflächen 38 mehr oder weniger in einer gemeinsamen Radialebene bezüglich der Längsachse 26 verlaufen und mithin gleichzeitig in abstützender Weise an der ringförmigen Dichtung 22 anliegen können.

Bei dem Ausführungsbeispiel der Figuren 9 bis 17 dienen zwar auch sämtliche Fußabschnitte 37 zur axialen Abstützung der ringförmigen Dichtung 22. Es findet jedoch eine Unterteilung dahingehend statt, dass nur einige Fußabschnitte 37, 37a direkt mit der ringförmigen Dichtung 22 kooperieren, während die anderen Fußabschnitte 37, 37b eine nur indirekte Abstützung der ringförmigen Dichtung 22 durchführen.

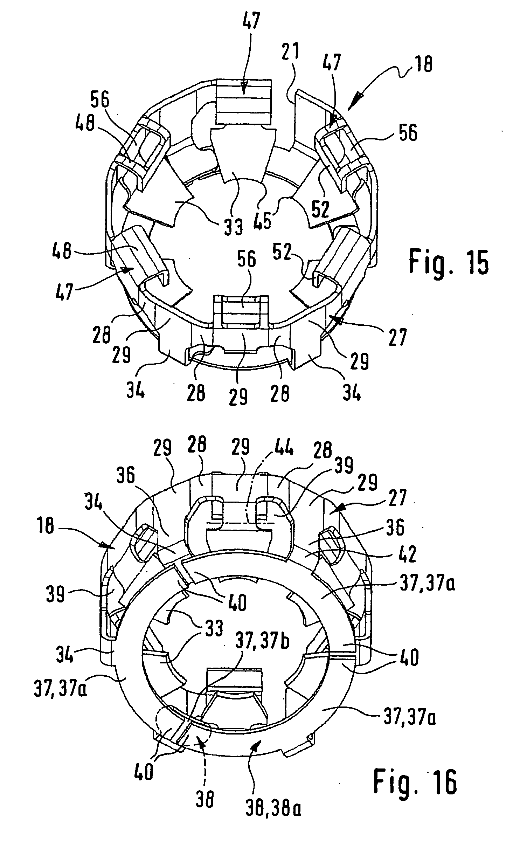

Die die ringförmige Dichtung 22 unmittelbar beaufschlagenden Stützbeine 34 besitzen einen längeren Schenkelabschnitt 36 als die nicht in unmittelbaren Kontakt mit der ringförmigen Dichtung 22 gelangenden anderen Stützbeine 34. Ihr Fußabschnitt 37, 37a hat zudem in der Umfangsrichtung des Käfigelementes 18 eine größere Breite als derjenige der kürzeren Stützbeine 34. In Verbindung mit einer ausreichenden Breite der betreffenden Fußabschnitte 37, 37a ergibt sich dann die beispielsweise aus Figur 16 gut ersichtliche Konstellation, wonach die breiteren Fußabschnitte 37a die ihnen in der Umfangsrichtung des Käfigelementes 18 insbesondere beidseits benachbarten schmäleren Fußabschnitte 37, 37b der kürzeren Stützbeine 34 untergreifen, so dass sie von diesen in axialer Richtung abstützbar sind.

Bei dem konkreten Ausführungsbeispiel haben die breiteren Fußabschnitte 37a die bevorzugte Gestalt von Ringsegmenten, d.h. die Gestalt eines Längenabschnittes eines Ringes. Ausgehend von dem sie jeweils tragenden Schenkelabschnitt 36 überbrücken sie jeweils die sich in der Umfangsrichtung des Käfigelementes 18 beidseits anschließenden Zwischenräume 39, in die jeweils ein Krallenelement 33 hineinragt, um dann mit ihren einander entgegengesetzten Endabschnitten 40 in dem dem benachbarten schmäleren Fußabschnitt 37, 37b zur ringförmigen Dichtung 22 hin axial vorgelagerten Bereich zu enden. Die Endabschnitte 40 können insbesondere an den Abstützflächen 38 der schmäleren Fußabschnitte 37, 37b anliegen.

Zweckmäßigerweise ist die Anordnung so getroffen, dass jeder schmälere Fußabschnitt 37, 37b gleichzeitig die einander zugewandten Endabschnitte 40 zweier in der Umfangsrichtung des Käfigelementes 18 aufeinanderfolgender breiterer Fußabschnitte 37, 37a abstützt.

Zwischen den einander zugewandten Endabschnitten 40 aufeinanderfolgender breiterer Fußabschnitte 37, 37a ist zweckmäßigerweise kein oder ein nur geringer Abstand, sodass sich insgesamt eine zumindest annähernd in sich geschlossene ringförmige Gesamt-Abstützfläche 38a ergibt, die an der axial vorgelagerten ringförmigen Dichtung 22 unmittelbar anliegen kann.

Da die Endabschnitte 40 von den schmäleren Fußabschnitten 37, 37b abgestützt sind, können sie trotz ihrer großen Umfangslänge nicht nennenswert umgebogen werden und es liegt eine äußerst stabile Abstützstruktur für die ringförmige Dichtung 22 vor.

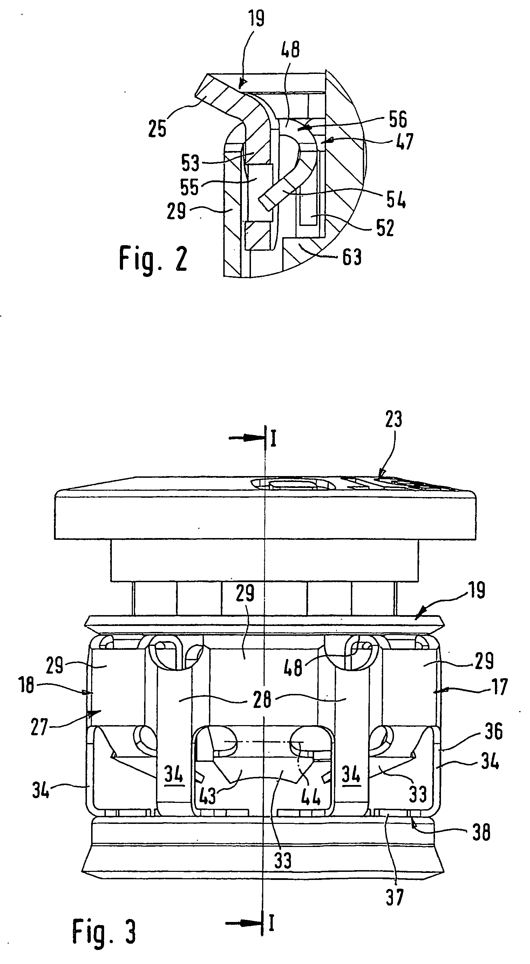

Die Krallenelemente 33 enthalten beim Ausführungsbeispiel jeweils einen sich unmittelbar an den Tragabschnitt 27 anschließenden, durch eine Art Einschnürung realisierten Halsabschnitt 42 und einen sich an den Halsabschnitt 42 mit bezüglich diesem größerer Breite anschließenden Beaufschlagungsabschnitt 43, welcher letztere für die Beaufschlagung des Außenumfanges der eingesteckten Fluidleitung vorgesehen ist. Durch den schmäleren Halsabschnitt 42 wird eine optimale elastische Verformbarkeit für den zugeordneten Beaufschlagungsabschnitt 43 gewährleistet. Der Halsabschnitt 42 definiert praktisch eine in Figuren 3 und 8 sowie Figuren 11 und 16 strichpunktiert angedeutete Biegelinie 44, bezüglich der der Beaufschlagungsabschnitt 43 verschwenkbar ist. Da sich der Halsabschnitt 42 an einen Flachabschnitt 29 des Tragabschnittes 27 anschließt, besitzt die Biegelinie 44 einen zu dem Flachabschnitt 29 parallelen Verlauf, was die Federelastizität begünstigt.

Außerdem wird durch den Halsabschnitt 42 ein Biegebereich vordefiniert, um den bei der Biegeherstellung des Käfigelementes 18 die äußeren Endabschnitte der Krallenelemente 33 schräg nach innen biegbar sind, sodass sich der aus der Zeichnung ersichtliche Schrägverlauf der Beaufschlagungsabschnitte 43 einstellt.

Sowohl die Krallenelemente 33 als auch die Stützbeine 34 haben zweckmäßigerweise ausgehend vom Tragabschnitt 27 bis hin zu ihrem entgegengesetzten Endbereich eine flache Gestalt. Soweit das Käfigelement 18 an den Eckabschnitten 28 abgerundet ist, beschränkt sich diese Abrundung zweckmäßigerweise auf den Bereich des Tragabschnittes 27, mit einem sanften Übergang in die sich eventuell anschließenden flachen Schenkelabschnitte 36.

Die Beaufschlagungsabschnitte 43 der Krallenelemente 33 liegen mit ihren den Tragabschnitt 27 entgegengesetzten stirnseitigen Rändern 45 am Außenumfang der eingesteckten Fluidleitung 8 an. Damit die Beaufschlagungsabschnitte 43 nicht nur eine kraftschlüssige Fixierung bewirken, sondern auch geringfügig in die Wandung der Fluidleitung 8 eindringen und eine zusätzliche formschlüssige Fixierung derselben bewirken können, sind die Ränder 45 beim Ausführungsbeispiel in einer besonderen Weise gestaltet. Und zwar besitzen die Ränder 45 über ihre gesamte Länge hinweg eine konkave Bogenform mit einem Bogenradius, der geringer ist als der Außenradius der zu fixierenden Fluidleitung 8. Daraus resultieren pro Beaufschlagungsabschnitt 43 zwei in der Umfangsrichtung des Käfigelementes 18 beabstandete, die Konkavität begrenzende erhabene Spitzen 46. Sie liegen als erstes, vor der Bogenkontur, am Außenumfang der eingesteckten Fluidleitung 8 an und können sehr leicht in deren Wandung eindringen, unabhängig ob es sich um eine starre oder um eine flexible Fluidleitung bzw. einen Fluidschlauch handelt.

Wird auf die eingesteckte Fluidleitung 8 eine der Einsteckrichtung 12 entgegengesetzte Zugkraft ausgeübt, sei es durch manuelles Ziehen oder durch den auf die innere Stirnfläche der Fluidleitung 8 einwirkenden Fluiddruck, verstärkt sich die zwischen der Fluidleitung 8 und den Beaufschlagungsabschnitten 43 herrschende Eindringkraft und die Beaufschlagungsabschnitte 43 können letztlich auch entlang ihrer gesamten Randlänge in die Wandung der Fluidleitung 8 eindringen, wie dies in Figur 5 angedeutet ist.

Durch die pro Beaufschlagungsabschnitt 43 vorgesehenen zwei Spitzen 46 erreicht man eine sehr zuverlässige Mehrpunktfixierung der eingesteckten Fluidleitung 8 von Anbeginn an und erhält somit einen sehr sicheren Halt für die eingesteckte Fluidleitung 8.

Der schon erwähnte, bezüglich dem Käfigelement 18 als separate Komponente ausgebildete Verankerungsring 19 ist zweckmäßigerweise durch besonders vorteilhafte Maßnahmen in den Einsatz 17 integriert und mit dem Käfigelement 18 zu der schon erwähnten Baueinheit zusammengefasst.

Das Käfigelement 18 verfügt an der den Krallenelementen 33 entgegengesetzten axialen Außenseite des Tragabschnittes 27 an mehrere Flachabschnitte 29 einstückig anschließend jeweils einen Laschenabschnitt 47, der unter Bildung einer U-förmigen Struktur nach radial innen und anschließend axial zurück umgebogen ist. Dadurch besitzt jeder Laschenabschnitt 47 einen vom nach radial innen weisenden Quersteg der U-Kontur gebildeten Abstützabschnitt 48 und einen sich daran anschließenden, nach axial innen ragenden Schenkel 52, der mit Abstand parallel zum zugeordneten Flachabschnitt 29 verläuft.

Es ist möglich, jedem Flachabschnitt 29 einen Laschenabschnitt 47 zuzuordnen. Beim Ausführungsbeispiel der Figuren 1 bis 8 ist dies der Fall. Bei dessen sechseckig gestalteten Käfigelement 18 sind mithin sechs solcher Laschenabschnitte 47 vorhanden. Durch das Ausführungsbeispiel der Figuren 9 bis 17 wird illustriert, dass einige der Flachabschnitte 29 auch ohne Laschenabschnitt 47 ausgeführt werden können. Beispielhaft sind die Flachabschnitte 29 in der Umfangsrichtung des Tragabschnittes 27 abwechselnd mit und ohne Laschenabschnitt 47 ausgebildet.

Der Verankerungsring 19 ist von der äußeren Axialseite her an das Käfigelement 18 angesteckt, wobei er an den Abstützabschnitten 48 anliegt. Gleichzeitig greift er mit mehreren entlang seines Umfanges verteilten Verbindungslaschen 53 axial in das Käfigelement 18 ein. Auch bei dem Verankerungsring 19 handelt es sich vorzugsweise um ein Stanzbiegeteil, hergestellt aus einem ursprünglich ebenen metallischen Rohteil, aus dem der Ringkörper mit nach radial innen ragenden Verbindungslaschen 53 ausgestanzt wird, wonach die Verbindungslaschen 53 aus der Ringebene in die axiale Richtung ausgebogen werden.

Beim Ausführungsbeispiel der Figuren 1 bis 8 sind die Verbindungslaschen ösenartig ausgebildet. Zu ihrer Herstellung werden sie zweckmäßigerweise beim Ausstanzen des vorgenannten Ringkörpers gelocht.

Weiterhin bezugnehmend auf das Ausführungsbeispiel der Figuren 1 bis 8, ist der Verankerungsring 19 durch mit dem Käfigelement 18 einstückige Haltezungen 54 unverlierbar am Käfigelement 18 fixiert. Diese Haltezungen 54 tauchen in die Durchbrechungen 55 der gelochten Verbindungslaschen 53 ein und bewirken eine formschlüssige Verriegelung, eventuell mit geringem axialem spiel.

Beiden Ausführungsbeispielen ist gemeinsam, dass die Verbindungslaschen 53 jeweils ein Fenster 56 durchgreifen, das im Abstützabschnitt 48 eines Laschenabschnittes 47 ausgespart ist. Die Anzahl der Verbindungslaschen 53 kann geringer sein als diejenige der Laschenabschnitte 47, sodass auch nicht jeder Abstützabschnitt 48 eines Fensters bedarf. Von Vorteil ist es allerdings, wenn die Verbindungslaschen 53 über den Umfang des Verankerungsringes 19 hinweg gleichmäßig verteilt sind, wobei die Ausführungsbeispiele insgesamt drei unter Winkelabständen von 120° verteilte Verbindungslaschen 53 vorsehen. Von den Laschenabschnitten 47 des Käfigelementes 18 ist nur jedes zweite mit einem Fenster 56 versehen, durch das die zugeordnete Verbindungslasche 53 hindurchtaucht.

Axial im Anschluss an jedes Fenster 56 ist bei dem ersten Ausführungsbeispiel eine der Haltezungen 54 vorgesehen. Sie ist vom Schenkel 52 des betreffenden Laschenabschnittes 47 zum benachbarten Flachabschnitt 29 hin ausgebogen und taucht insbesondere schräg in die zwischen dem Flachabschnitt 29 und dem Schenkel 52 liegende Durchbrechung 55 der eingesteckten Verbindungslasche 53 hinein. Dies ist am besten aus Figur 2 ersichtlich.

Bei der Herstellung des Einsatzes 17 werden zunächst das Käfigelement 18 und der Verankerungsring 19 abgesehen von den ausgebogenen Haltezungen 54 komplett fertiggestellt. Nach dem anschließenden Zusammenstecken werden die Haltezungen 54 in die Durchbrechungen 55 hineingebogen. Die Haltezungen 54 hat man dabei zweckmäßigerweise zuvor schon durch in den Schenkel 52 eingebrachte Schnitte vordefiniert.

Die Verbindung zwischen dem Verankerungsring 19 und dem Käfigelement 18 kann axial durchaus leicht spielbehaftet sein. Die Funktionalität der Anschlussvorrichtung 2 wird dadurch nicht beeinträchtigt.

Aus dem in Figuren 9 bis 17 illustrierten zweiten Ausführungsbeispiel ist ersichtlich, dass der Verankerungsring 19 auch durch eine Rastverbindung am Käfigelement 18 angebracht sein kann. Zweckmäßigerweise sind hier die Verbindungslaschen 53 mit Rastmitteln 59 versehen, über die sie mit dem Käfigelement 18 in Rasteingriff stehen.

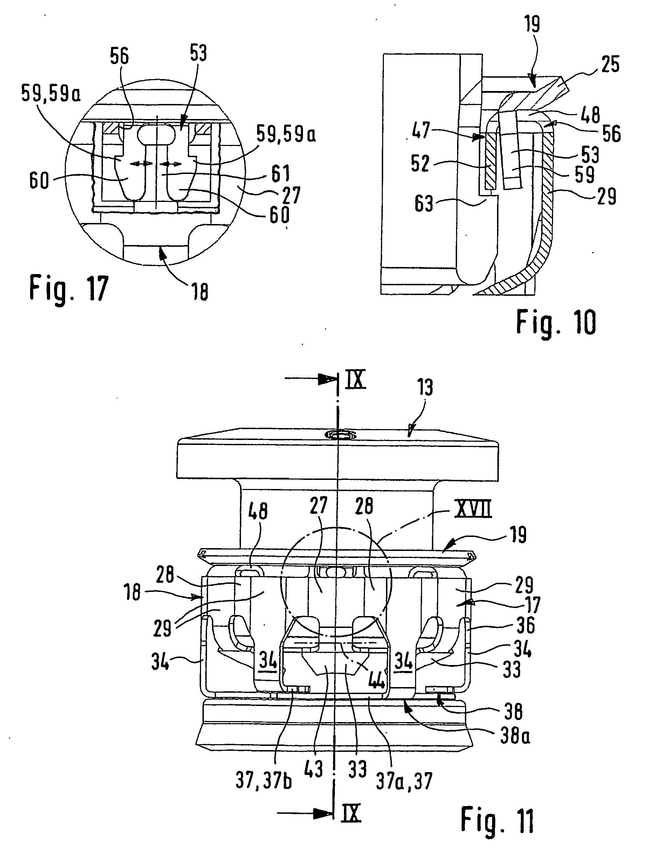

Vorzugsweise sind die Verbindungslaschen 53, wie dies aus Figur 17 gut hervorgeht, längsgeschlitzt, sodass sich zwei mit Querabstand nebeneinander verlaufende Laschenschenkel 60 ergeben, die als Rastmittel 59 jeweils einen in der Umfangsrichtung des Käfigelementes 18 seitlich wegragenden Rastvorsprung 59a aufweisen. Bedingt durch den zwischen ihnen verlaufenden, zur freien Stirnfläche der Verbindungslasche 53 hin offenen Längsschlitz 61 sind die Laschenschenkel 60 gemäß den eingezeichneten Pfeilen quer zu ihrer Längsrichtung elastisch verformbar.

Die Gesamtbreite der Verbindungslasche 63 im Bereich der Rastvorsprünge 59a ist größer als die entsprechend gemessene Breite des Fensters 56. Daher sind sie in der Lage, die von dem Laschenabschnitt 47 gebildete Umrahmung des Fensters 56 verrastend zu hintergreifen.

Bei diesem zweiten Ausführungsbeispiel gestaltet sich das axiale Zusammenfügen des Verankerungsringes 19 und des Käfigelementes 18 einfacher als beim ersten Ausführungsbeispiel, da nach dem Zusammenstecken kein weiterer formgebender Prozess erforderlich ist.

Zwischen dem Verankerungsring 19 und dem Käfigelement 18 kann vor dem Einsetzen in die Aufnahme 3 durchaus ein gewisses axiales Spiel vorhanden sein. Nach dem Einsetzen in die Aufnahme 3 ist das Käfigelement 33 zwischen dem verankerten Verankerungsring 19 und der ringförmigen Dichtung 22 axial unbeweglich gefangen.

Wie aus Figur 10 hervorgeht, können die Verbindungslaschen 53 gegenüber der Längsachse des Käfigelementes 18 durchaus einen leichten Schrägverlauf aufweisen, wobei sie sich zu ihrem freien Ende hin zunehmend von der genannten Längsachse entfernen.

Wenn das Käfigelement 18 an einer Stelle seines Umfanges eine Unterbrechung 21 aufweist, kann durch die in die Fenster 56 eingreifenden verbindungslaschen 53 eine Vorgabe und/oder Stabilisierung der gewünschten Ringstruktur herbeigeführt werden.

Die oben bereits erwähnte, koaxial in den Einsatz 17 eingesteckte Lösehülse 23 ragt mit einem Beaufschlagungsabschnitt 57 bis vor die nach axial außen weisenden Rückseiten der Beaufschlagungsabschnitte 43 der Krallenelemente 33. Ein beispielsweise ringförmiger Betätigungsabschnitt 58 der Lösehülse 23 ragt axial außen aus dem Einsatz 17 heraus und steht über das Trägerbauteil 1 vor. Wird auf den Betätigungsabschnitt 58 eine in der Einsteckrichtung 12 wirkende Drückkraft ausgeübt, verschiebt sich die Lösehülse 23 nach innen und drückt mit ihrem Beaufschlagungsabschnitt 57 so gegen die Beaufschlagungsabschnitte 43 der Krallenelemente 33, dass diese gemäß Pfeil 62 nach außen verschwenkt werden und ihren Haltegriff bezüglich der eingesteckten Fluidleitung 8 lösen. Letztere kann dann wieder aus der Anschlussvorrichtung 2 herausgezogen werden.

Zur verliersicheren Halterung innerhalb des Einsatzes 17 verfügt die Lösehülse 23 innerhalb des Käfigelementes 18 am Außenumfang einen umlaufenden Radialvorsprung 63, der die nach axial innen weisenden Stirnflächen der Schenkel 52 radial hintergreift. Diese Schenkel 52 übernehmen folglich auch eine Sicherungsfunktion zur Halterung der Lösehülse 23 am Einsatz 17.

Um die Montage der Lösehülse 23 zu erleichtern ist diese ausgehend von der den Krallenelemente 33 zugewandten vorderen Stirnseite bis jenseits des Radialvorsprunges 63 mehrfach längs geschlitzt. Daraus resultiert eine in Umfangsrichtung unterbrochene segmentierte Gestaltung des Beaufschlagungsabschnittes 27 und des Radialvorsprunges 63. Auf Grund der Schlitze 64 können die einzelnen Segmente der Lösehülse 23 elastisch rückfedernd nach radial innen verschwenken, wenn die Lösehülse 23 mit ihrem den Radialvorsprung 63 aufweisenden vorderen Bereich durch die von den Schenkeln 52 definierte Engstelle des Einsatzes 17 hindurchgedrückt wird. Die Lösehülse 23 ist mithin durch eine Rastverbindung zwischen dem segmentierten Radialvorsprung 63 und den einzelnen Laschenabschnitten 47 gehalten.

## Patentansprüche

1. Anschlussvorrichtung für eine Fluidleitung, mit einem zur Steckmontage in einer kreiszylindrischen Aufnahme eines Trägerbauteils geeigneten, ring- oder hülsenförmigen Einsatz (17), der mehrere in seiner Umfangsrichtung verteilte, nach radial innen ragende federelastische Krallenelemente (33) für die umfangsseitige Beaufschlagung einer eingesteckten Fluidleitung (8) sowie die Krallenelemente (33) axial überragende Abstützmittel für eine die eingesteckte Fluidleitung (8) umschließende ringförmige Dichtung (22) aufweist, wobei der Einsatz (17) ein als metallisches Stanzbiegeteil ausgeführtes, ring- oder hülsenförmiges Käfigelement (18) enthält, das einen ringförmigen Tragabschnitt (27) aufweist, ausgehend von dem zur gleichen Axialseite zum einen die Abstützmittel bildende Stützbeine (34) und zum anderen die Krallenelemente (33) wegragen, die jeweils einstückig mit dem Tragabschnitt (27) ausgebildet sind, **dadurch gekennzeichnet, dass** der Tragabschnitt (27) eine mehreckige Umfangskontur mit zwischen den Eckabschnitten (28) verlaufenden Flachabschnitten (29) aufweist.

2. Anschlussvorrichtung nach Anspruch 1, **dadurch gekennzeichnet, dass** die Eckabschnitte (28) abgerundet sind.

3. Anschlussvorrichtung nach Anspruch 1 oder 2, **dadurch gekennzeichnet, dass** die Krallenelemente (33) von den Flachabschnitten (29) und die Stützbeine (34) von den Eckabschnitten (28) ausgehen oder umgekehrt.

4. Anschlussvorrichtung nach Anspruch 3 in Verbindung mit Anspruch 2, **dadurch gekennzeichnet, dass** die von den abgerundeten Eckabschnitten (28) ausgehenden Stützbeine (34) oder Krallenelemente (33) Flachgestalt besitzen.

5. Anschlussvorrichtung nach Anspruch 1 oder 2, **dadurch gekennzeichnet, dass** sowohl die Krallenelemente (33) als auch die Stützbeine (34) von den Flachabschnitten (29) des Tragabschnittes (27) ausgehen.

6. Anschlussvorrichtung nach Anspruch 5, **dadurch gekennzeichnet, dass** die Stützbeine (34) und die Krallenelemente (33) in der Umfangsrichtung des Tragabschnittes (27) in abwechselnder Reihenfolge an den Flachabschnitten (29) angeordnet sind.

7. Anschlussvorrichtung nach einem der Ansprüche 1 bis 6, **dadurch gekennzeichnet, dass** sowohl die Krallenelemente (33) als auch die Stützbeine (34) Flachgestalt besitzen.

8. Anschlussvorrichtung nach einem der Ansprüche 1 bis 7, **dadurch gekennzeichnet, dass** die Krallenelemente (33) ausgehend von dem ringförmigen Tragabschnitt (27) schräg nach radial innen ragen.

9. Anschlussvorrichtung nach einem der Ansprüche 1 bis 8, **dadurch gekennzeichnet, dass** die der zu haltenden Fluidleitung (8) zugewandten stirnseitigen Ränder (45) der Krallenelemente (33) eine zwischen zwei in der Umfangsrichtung des Käfigelementes (18) beabstandeten Spitzen (46) verlaufende konkave Bogenform aufweisen.

10. Anschlussvorrichtung nach Anspruch 9, **dadurch gekennzeichnet, dass** der Radius der Konkavität geringer ist als der Außenradius der zu haltenden Fluidleitung (8).

11. Anschlussvorrichtung nach einem der Ansprüche 1 bis 10, **dadurch gekennzeichnet, dass** die Stützbeine (34) jeweils einen sich ausgehend vom Tragabschnitt (27) insbesondere linear axial erstreckenden Schenkelabschnitt (36) und einen sich daran anschließenden, nach radial innen ragenden Fußabschnitt (37) aufweisen.

12. Anschlussvorrichtung nach Anspruch 11, **dadurch gekennzeichnet, dass** die axial vom Tragabschnitt (27) wegweisende Grundfläche der Fußabschnitte (37) einiger oder sämtlicher Stützbeine (34) eine zur Beaufschlagung der koaxial vorgelagerten ringförmigen Dichtung (22) vorgesehene Abstützfläche (38) bildet.

13. Anschlussvorrichtung nach Anspruch 12, **dadurch gekennzeichnet, dass** die Abstützflächen (38) sämtlicher Fußabschnitte (37) zur unmittelbaren Beaufschlagung der vorgelagerten ringförmigen Dichtung (22) ausgebildet sind.

14. Anschlussvorrichtung nach Anspruch 12, **dadurch gekennzeichnet, dass** die Fußabschnitte (37, 37a) mehrerer Stützbeine (34) zur unmittelbaren Beaufschlagung der vorgelagerten ringförmigen Dichtung (22) ausgebildet sind, wobei sie in der Umfangsrichtung des Käfigelementes (18) eine derartige Breite aufweisen, dass sie den Fußabschnitt (37, 37a) mindestens eines in der Umfangsrichtung des Käfigelementes (18) benachbarten Stützbeines (34) untergreifen und ihrerseits von diesem abgestützt sind.

15. Anschlussvorrichtung nach Anspruch 14, **dadurch gekennzeichnet, dass** die von einem oder mehreren Fußabschnitten (37, 37a) abgestützten Fußabschnitte (37, 37b) nach Art von Ringsegmenten ausgebildet sind.

16. Anschlussvorrichtung nach einem der Ansprüche 11 bis 15, **dadurch gekennzeichnet, dass** der Fußabschnitt (37) eine größere Breite als der zugeordnete Schenkelabschnitt (36) aufweist.

17. Anschlussvorrichtung nach Anspruch 16, **dadurch gekennzeichnet, dass** sich die Fußabschnitte (37) der Stützbeine (34) in der Umfangsrichtung des Käfigelementes (18) mit den in der Umfangsrichtung jeweils benachbarten Krallenelementen (33) überlappen.

18. Anschlussvorrichtung nach einem der Ansprüche 1 bis 17, **dadurch gekennzeichnet, dass** jedes Krallenelement (33) einen sich unmittelbar an den Tragabschnitt (27) anschließenden Halsabschnitt (42) und einen sich an den Halsabschnitt (42) mit bezüglich diesem größerer Breite anschließenden Beaufschlagungsabschnitt (43) aufweist.

19. Anschlussvorrichtung nach einem der Ansprüche 1 bis 18, **gekennzeichnet durch** dem Käfigelement (18) zugeordnete Verankerungsmittel (19, 25) zur axial fixierten Verankerung in der kreiszylindrischen Aufnahme (3) des Trägerbauteils (1).

20. Anschlussvorrichtung nach Anspruch 19, **dadurch gekennzeichnet, dass** die Verankerungsmittel (19, 25) Bestandteil des Einsatzes (17) sind.

21. Anschlussvorrichtung nach Anspruch 19 oder 20, **dadurch gekennzeichnet, dass** die Verankerungsmittel mindestens einen radial über die Außenkontur des Käfigelementes (18) hinausragenden Verankerungsvorsprung (25) aufweisen.

22. Anschlussvorrichtung nach Anspruch 21, **dadurch gekennzeichnet, dass** der mindestens eine Verankerungsvorsprung (25) Bestandteil eines in koaxialer Zuordnung mit dem Käfigelement (18) zu einer Baueinheit zusammengefassten gesonderten Verankerungsringes (19) ist.

23. Anschlussvorrichtung nach Anspruch 22, **dadurch gekennzeichnet, dass** der Verankerungsring (19) einen von seinem radial außen angeordneten Randabschnitt gebildeten ringförmigen Verankerungsvorsprung (25) aufweist.

24. Anschlussvorrichtung nach Anspruch 22 oder 23, **dadurch gekennzeichnet, dass** der Verankerungsring (19) an der den Krallenelementen (33) entgegengesetzten äußeren Axialseite an das Käfigelement (18) angesteckt ist.

25. Anschlussvorrichtung nach Anspruch 24, **dadurch gekennzeichnet, dass** der Verankerungsring (19) mit mehreren entlang seines Umfanges verteilten ösenartigen Verbindungslaschen (53) axial in das Käfigelement (18) eintaucht und mittels in die Durchbrechungen (55) der Verbindungslaschen (53) eingebogenen Haltezungen (54) des Käfigelementes (18) an dem Käfigelement (18) axial gehalten ist.

26. Anschlussvorrichtung nach Anspruch 25, **dadurch gekennzeichnet, dass** die Verbindungslaschen (53) jeweils ein im Käfigelement (18) ausgebildetes Fenster (56) durchgreifen, an das sich eine der Haltezungen (54) anschließt.

27. Anschlussvorrichtung nach Anspruch 26, **dadurch gekennzeichnet, dass** die Fenster (56) jeweils im nach radial innen ragenden Quersteg eines U-förmig umgebogenen Laschenabschnittes (47) des Käfigelementes (18) ausgebildet sind, wobei die zugeordnete Haltezunge (54) aus dem radial innen liegenden Schenkel (52) des Laschenabschnittes ausgebogen ist.

28. Anschlussvorrichtung nach Anspruch 27, **dadurch gekennzeichnet, dass** die Laschenabschnitte (47) im Bereich der Flachabschnitte (29) einstückig mit dem Tragabschnitt (27) des Käfigelementes (18) verbunden sind.

29. Anschlussvorrichtung nach Anspruch 27 oder 28, **dadurch gekennzeichnet, dass** die Querstege der Laschenabschnitte (47) zur Abstützung des angesteckten Verankerungsringes (19) dienende Abstützabschnitte (48) bilden.

30. Anschlussvorrichtung nach Anspruch 22 bis 24, **dadurch gekennzeichnet, dass** der Verankerungsring (19) in verrasteter Weise an das Käfigelement (18) angesteckt ist.

31. Anschlussvorrichtung nach Anspruch 30, **dadurch gekennzeichnet, dass** der Verankerungsring (19) mit mehreren entlang seines Umfanges verteilten Verbindungslaschen (53) axial in das Käfigelement (18) eintaucht, wobei die Verbindungslaschen (53) Rastmittel (59) aufweisen, über die sie mit dem Käfigelement (18) in Rasteingriff stehen.

32. Anschlussvorrichtung nach Anspruch 31, **dadurch gekennzeichnet, dass** die Verbindungslaschen (53) jeweils ein im Käfigelement (18) ausgebildetes Fenster (56) durchgreifen und über quer abstehende Rastvorsprünge (59a) verfügen, die die Umrahmung des Fensters (56) verrastend hintergreifen.

33. Anschlussvorrichtung nach Anspruch 32, **dadurch gekennzeichnet, dass** die Verbindungslaschen (53) längs geschlitzt sind und dadurch in zwei mit Querabstand nebeneinander verlaufende Laschenschenkel (60) unterteilt sind, die jeweils einen Rastvorsprung (59a) aufweisen.

34. Anschlussvorrichtung nach Anspruch 32 oder 33, **dadurch gekennzeichnet, dass** die Fenster (56) jeweils im nach radial innen ragenden Quersteg eines U-förmig umgebogenen Laschenabschnittes (47) des Käfigelementes (18) ausgebildet sind.

35. Anschlussvorrichtung nach Anspruch 34, **dadurch gekennzeichnet, dass** die Laschenabschnitte (47) im Bereich der Flachabschnitte (29) einstückig mit dem Tragabschnitt (27) des Käfigelementes (18) verbunden sind.

36. Anschlussvorrichtung nach Anspruch 34 oder 35, **dadurch gekennzeichnet, dass** die Querstege der Laschenabschnitte (47) zur Abstützung des angesteckten Verankerungsringes (19) dienende Abstützabschnitte (48) bilden.

37. Anschlussvorrichtung nach einem der Ansprüche 1 bis 36, **gekennzeichnet durch** eine bezüglich dem Einsatz (17) axial bewegliche Lösehülse (23), die von axial außen her in den Einsatz (17) hineinragt und einen den Krallenelementen (33) axial außen gegenüberliegenden Beaufschlagungsabschnitt (57) aufweist.

38. Anschlussvorrichtung nach Anspruch 37, **dadurch gekennzeichnet, dass** die Lösehülse (23) in dem innerhalb des Einsatzes (17) liegenden Bereich einen ringförmigen Radialvorsprung (63) aufweist, der den radial innen liegenden Schenkel (52) der Laschenabschnitte (47) zur verliersicheren Halterung radial hintergreift, wobei er in seiner Umfangsrichtung unterbrochen bzw. segmentiert sein kann.

39. Anschlussvorrichtung nach einem der Ansprüche 1 bis 38, **dadurch gekennzeichnet, dass** das Käfigelement (18) an einer Stelle seines Umfanges eine Unterbrechung (21) aufweist.

40. Anschlussvorrichtung nach einem der Ansprüche 1 bis 39, **dadurch gekennzeichnet, dass** das Trägerbauteil (1) von der Wandung einer fluidtechnischen Komponente oder von einem Anschlussmittel (4) aufweisenden individuellen Gehäusekörper gebildet ist.

## Claims

1. Connecting device for a fluid line, comprising an annular or sleeve-shaped insert (17) suitable for plugging into a circular cylindrical receptacle of a support part, which insert (17) comprises a plurality of spring-elastic claw elements (33) distributed in its circumferential direction and projecting radially inwards for applying pressure to the circumference of an inserted fluid line (8), and further comprising support means axially projecting beyond the claw elements (33) for an annular seal (22) enclosing the inserted fluid line (8), wherein the insert (17) comprises an annular or sleeve-shaped cage element (18) designed as a metallic stamped and bent part and having an annular support section (27) wherefrom project towards the same axial side on the one hand support legs (34) forming the support means and on the other hand the claw elements (33), each being integrated with the support section (27), **characterised in that** the support section (27) has a polygonal circumferential contour with flat sections (29) extending between the corner sections (28).

2. Connecting device according to claim 1, **characterised in that** the corner sections (28) are radiused.

3. Connecting device according to claim 1 or 2, **characterised in that** the claw elements (33) start from the flat sections (29) and the support legs (34) start from the corner sections (28) or vice versa.

4. Connecting device according to claim 3 in combination with claim 2, **characterised in that** the support legs (34) or claw elements (33) starting from the radiused corner sections (28) have a flat shape.

5. Connecting device according to claim 1 or 2, **characterised in that** both the claw elements (33) and the support legs (34) start from the flat sections (29) of the support section (27).

6. Connecting device according to claim 5, **characterised in that** the support legs (34) and the claw elements (33) are arranged on the flat sections (29) in an alternating sequence in the circumferential direction of the support section (27).

7. Connecting device according to any of claims 1 to 6, **characterised in that** both the claw elements (33) and the support legs (34) have a flat shape.

8. Connecting device according to any of claims 1 to 7, **characterised in that** the claw elements (33) project radially inwards at an angle starting from the annular support section (27).

9. Connecting device according to any of claims 1 to 8, **characterised in that** the end edges (45) of the claw elements (33) which face the fluid line (8) to be held have a concave arcuate shape extending between two points (46) arranged at a distance from each other in the circumferential direction of the cage element (18).

10. Connecting device according to claim 9, **characterised in that** the radius of the concavity is less than the outer radius of the fluid line (8) to be held.

11. Connecting device according to any of claims 1 to 10, **characterised in that** each of the support legs (34) comprises a leg section (36) extending axially from the support section (27) in an in particular linear arrangement and an adjoining foot section (37) projecting radially inwards.

12. Connecting device according to claim 11, **characterised in that** the base surface of the foot sections (37) of some or all of the support legs (34), which base surface projects axially from the support section (27), forms a support surface (38) provided for applying pressure to the annular seal (22) located coaxially in front.

13. Connecting device according to claim 12, **characterised in that** the support surfaces (38) of all foot sections (37) are designed for directly applying pressure to the annular seal (22) located in front.

14. Connecting device according to claim 12, **characterised in that** the foot sections (37, 37a) of several support legs (34) are designed for directly applying pressure to the annular seal (22) located in front, having in the circumferential direction of the cage element (18) such a width that they engage the foot section (37, 37a) of at least one support leg (34) adjacent in the circumferential direction of the cage element (18) from below and are in turn supported thereby.

15. Connecting device according to claim 14, **characterised in that** the foot sections (37, 37b) supported by one or more of the foot sections (37, 37a) are designed in the manner of annular segments.

16. Connecting device according to any of claims 11 to 15, **characterised in that** the foot section (37) has a greater width than the associated leg section (36).

17. Connecting device according to claim 16, **characterised in that** the foot sections (37) of the support legs (34) overlap in the circumferential direction of the cage element (18) the claw elements (33) which are adjacent in the circumferential direction.

18. Connecting device according to any of claims 1 to 17, **characterised in that** each claw element (33) comprises a neck section (42) which immediately adjoins the support section (27) and a pressurisation section (43) adjoining the neck section (42) and having a greater width than the former.

19. Connecting device according to any of claims 1 to 18, **characterised by** anchoring means (19, 27) assigned to the cage element (18) for secure axial anchoring in the circular cylindrical receptacle (3) of the support part (1).

20. Connecting device according to claim 19, **characterised in that** the anchoring means (19, 25) are a part of the insert (17).

21. Connecting device according to claim 19 or 20, **characterised in that** the anchoring means comprise at least one anchoring projection (25) projecting radially beyond the external contour of the cage element (18).

22. Connecting device according to claim 21, **characterised in that** the at least one anchoring projection (25) is a part of a separate anchoring ring (19) combined in coaxial assignment with the cage element (18) to form an assembly.

23. Connecting device according to claim 22, **characterised in that** the anchoring ring (19) has an annular anchoring projection (25) represented by its radially outward-located edge section.

24. Connecting device according to claim 22 or 23, **characterised in that** the anchoring ring (19) is fitted to the cage element (18) on the outer axial side opposite the claw elements (33).

25. Connecting device according to claim 24, **characterised in that** the anchoring ring (19) axially dips into the cage element (18) with several eyelet-type link plates (53) distributed along its circumference and is axially held on the cage element (18) by means of retaining tabs (54) of the cage element (18) which are bent into the openings (55) of the link plates (53).

26. Connecting device according to claim 25, **characterised in that** each of the link plates (53) passes through a window (56) formed in the cage element (18), which window is adjoined by one of the retaining tabs (54).

27. Connecting device according to claim 26, **characterised in that** each of the windows (56) is formed in the radially inward-projecting transverse web of a U-shaped link plate section (47) of the cage element (18), the associated retaining tab (54) being bent out of the radially inward leg (52) of the link plate section.

28. Connecting device according to claim 27, **characterised in that** the link plate sections (47) are integrated in a single piece with the support section (27) of the cage element (18) in the region of the flat sections (29).

29. Connecting device according to claim 27 or 28, **characterised in that** the transverse webs of the link plate sections (47) form support sections (48) for the support of the plugged-on anchoring ring (19).

30. Connecting device according to any of claims 22 to 24, **characterised in that** the anchoring ring (19) is fitted to the cage element (18) in a latched manner.

31. Connecting device according to claim 30, **characterised in that** the anchoring ring (19) axially dips into the cage element (18) with several link plates (53) distributed along its circumference, the link plates (53) having latching means (59) by way of which they are in latching engagement with the cage element (18).

32. Connecting device according to claim 31, **characterised in that** each of the link plates (53) passes through a window (56) formed in the cage element (18) and has transversely extending latching projections (59a) which engage the frame of the window (56) from behind in a latching manner.

33. Connecting device according to claim 32, **characterised in that** the link plates (53) are slotted in the longitudinal direction and are therefore divided into two link plate legs (60) extending adjacent to and a lateral distance from each other, each having a latching projection (59a).

34. Connecting device according to claim 32 or 33, **characterised in that** each of the windows (56) is formed in the radially inward-projecting transverse web of a U-shaped link plate section (47) of the cage element (18).

35. Connecting device according to claim 34, **characterised in that** the link plate sections (47) are joined to the support section (27) of the cage element (18) in the region of the flat sections (19) to form a single piece.

36. Connecting device according to claim 34 or 35, **characterised in that** the transverse webs of the link plate sections (47) form support sections (48) for the support of the plugged-on anchoring ring (19).

37. Connecting device according to any of claims 1 to 36, **characterised by** a releasing sleeve (23) which is axially movable with respect to the insert (17), which axially projects into the insert (17) from the outside and which has a pressurisation section (57) located axially opposite the claw elements (33) on the outside.

38. Connecting device according to claim 37, **characterised in that** the releasing sleeve (23) has an annular radial projection (63) in the region lying within the insert (17), which annular radial projection (63) radially engages the radially inward leg (52) of the link plate sections (47) from behind for captive location and may be discontinuous or segmented in its circumferential direction.

39. Connecting device according to any of claims 1 to 38, **characterised in that** the cage element (18) has a break (21) at a point of its circumference.

40. Connecting device according to any of claims 1 to 39, **characterised in that** the support part (1) is represented by the wall of a fluid power component or by an individual housing body provided with connecting means (4).

## Revendications

1. Dispositif de raccordement pour une conduite de fluide, avec un insert (17) en forme d'anneau ou de manchon, convenant au montage par emboîtement dans un logement cylindrique et circulaire d'un composant porteur, l'insert présentant plusieurs éléments à griffes (33) élastiques se dressant radialement vers l'intérieur, répartis dans la direction périphérique de l'insert pour l'alimentation côté périphérie d'une conduite de fluide (8) emboîtée ainsi que des moyens d'appui dépassant axialement des éléments à griffes (33) pour une garniture (22) annulaire entourant la conduite de fluide (8) emboîtée, sachant que l'insert (17) contient un élément cage (18) en forme d'anneau ou de manchon, réalisé comme une pièce découpée et pliée métallique, qui présente une section porteuse (27) annulaire, à partir de laquelle d'une part des jambes d'appui (34) formant les moyens d'appui et d'autre part les éléments à griffes (33) dépassent vers le même côté axial, lesquels sont réalisés respectivement d'un seul tenant avec la section porteuse (27), **caractérisé en ce que** la section porteuse (27) présente un contour périphérique polygonal, dont les sections plates (29) s'étendent entre les sections d'angle (28).

2. Dispositif de raccordement selon la revendication 1, **caractérisé en ce que** les sections d'angle (28) sont arrondies.

3. Dispositif de raccordement selon la revendication 1 ou 2, **caractérisé en ce que** les éléments à griffes (33) partent des sections plates (29) et les jambes d'appui (34) partent des sections d'angle (28) ou inversement.

4. Dispositif de raccordement selon la revendication 3 en liaison avec la revendication 2, **caractérisé en ce que** les jambes d'appui (34) partant des sections d'angle arrondies (28) ou les éléments à griffes (33) possèdent une forme plate.

5. Dispositif de raccordement selon la revendication 1 ou 2, **caractérisé en ce que** non seulement les éléments à griffes (33) mais aussi les jambes d'appui (34) partent des sections plates (29) de la section porteuse (27).

6. Dispositif de raccordement selon la revendication 5, **caractérisé en ce que** les jambes d'appui (34) et les éléments à griffes (33) sont disposés dans la direction périphérique de la section porteuse (27) dans un ordre alternatif sur les sections plates (29).

7. Dispositif de raccordement selon l'une quelconque des revendications 1 à 6, **caractérisé en ce que** non seulement les éléments à griffes (33) mais aussi les jambes d'appui (34) possèdent une forme plate.

8. Dispositif de raccordement selon l'une quelconque des revendications 1 à 7, **caractérisé en ce que** les éléments à griffes (33) se dressent en biais radialement vers l'intérieur à partir de la section porteuse (27) annulaire.

9. Dispositif de raccordement selon l'une quelconque des revendications 1 à 8, **caractérisé en ce que** les bords (45) côté frontal, tournés vers la conduite de fluide à maintenir (8), des éléments à griffes (33) présentent une forme d'arc concave s'étendant entre deux pointes (46) espacées dans la direction périphérique de l'élément cage (18).

10. Dispositif de raccordement selon la revendication 9, **caractérisé en ce que** le rayon de la concavité est plus faible que le rayon extérieur de la conduite de fluide à maintenir (8).

11. Dispositif de raccordement selon l'une quelconque des revendications 1 à 10, **caractérisé en ce que** les jambes d'appui (34) présentent respectivement une section de branche (36) s'étendant à partir de la section porteuse (27) en particulier linéairement dans le sens axial et une section de pied (37) s'y raccordant, se dressant radialement vers l'intérieur.

12. Dispositif de raccordement selon la revendication 11, **caractérisé en ce que** la surface de base, s'éloignant axialement de la section porteuse (27), des sections de pied (37) de quelques ou de l'ensemble des jambes d'appui (34) forme une surface d'appui (38) prévue pour l'alimentation de la garniture (22) annulaire logée en amont coaxialement.

13. Dispositif de raccordement selon la revendication 12, **caractérisé en ce que** les surfaces d'appui (38) de l'ensemble des sections de pied (37) sont réalisées pour l'alimentation directe de la garniture annulaire (22) logée en amont.

14. Dispositif de raccordement selon la revendication 12, **caractérisé en ce que** les sections de pied (37, 37a) de plusieurs jambes d'appui (34) sont réalisées pour l'alimentation directe de la garniture (22) annulaire logée en amont, sachant qu'elles présentent dans la direction périphérique de l'élément cage (18) une largeur telle qu'elles viennent en prise derrière la section de pied (37, 37a) au moins d'une jambe d'appui (34) contiguë dans le sens périphérique de l'élément cage (18) et sont soutenues de leurs côtés par celle-ci.

15. Dispositif de raccordement selon la revendication 14, **caractérisé en ce que** les sections de pied (37, 37b) soutenues par une ou plusieurs sections de pied (37, 37a) sont réalisées comme des segments annulaires.

16. Dispositif de raccordement selon l'une quelconque des revendications 11 à 15, **caractérisé en ce que** la section de pied (37) présente une largeur plus grande que la section de branche (36) associée.

17. Dispositif de raccordement selon la revendication 16, **caractérisé en ce que** les sections de pied (37) des jambes d'appui (34) se chevauchent dans la direction périphérique de l'élément cage (18) avec les éléments à griffes (33) respectivement contigus dans la direction périphérique.

18. Dispositif de raccordement selon l'une quelconque des revendications 1 à 17, **caractérisé en ce que** chaque élément à griffes (33) présente une section de col (42) contigüe directement à la section porteuse (27) et une section d'alimentation (43) contiguë à la section de col (42) avec une largeur supérieure à celle-ci.

19. Dispositif de raccordement selon l'une quelconque des revendications 1 à 18, **caractérisé par** des moyens d'ancrage (19, 25) associés à l'élément cage (18) pour l'ancrage fixé axialement dans le logement (3) cylindrique et circulaire du composant porteur (1).

20. Dispositif de raccordement selon la revendication 19, **caractérisé en ce que** les moyens d'ancrage (19, 25) font partie de l'insert (17).

21. Dispositif de raccordement selon la revendication 19 ou 20, **caractérisé en ce que** les moyens d'ancrage présentent au moins une saillie d'ancrage (25) dépassant radialement au-delà du contour extérieur de l'élément cage (18).

22. Dispositif de raccordement selon la revendication 21, **caractérisé en ce que** l'au moins une saillie d'ancrage (25) fait partie d'un anneau d'ancrage (19) séparé, réuni en association coaxiale avec l'élément cage (18) pour former une unité de construction.

23. Dispositif de raccordement selon la revendication 22, **caractérisé en ce que** l'anneau d'ancrage (19) présente une saillie d'ancrage (25) annulaire formée par sa section de bord disposée radialement à l'extérieur.

24. Dispositif de raccordement selon la revendication 22 ou 23, **caractérisé en ce que** l'anneau d'ancrage (19) est attaché à l'élément cage (18) sur le côté axial extérieur opposé aux éléments à griffes (33).

25. Dispositif de raccordement selon la revendication 24, **caractérisé en ce que** l'anneau d'ancrage (19) s'enfonce, avec plusieurs languettes de liaison (53) de type oeillet réparties le long de sa périphérie, axialement dans l'élément cage (18) et il est maintenu axialement sur l'élément cage (18) à l'aide de lames de retenue (54) pliées dans les percements (55) des languettes de liaison (53) de l'élément cage (18).

26. Dispositif de raccordement selon la revendication 25, **caractérisé en ce que** les languettes de liaison (53) pénètrent respectivement dans une fenêtre (56) réalisée dans l'élément cage (18), à laquelle se raccorde l'une des lames de retenue (54).

27. Dispositif de raccordement selon la revendication 26, **caractérisé en ce que** les fenêtres (56) sont réalisées respectivement dans la nervure transversale se dressant radialement vers l'intérieur d'une section de languette pliée en forme de U (47) de l'élément cage (18), sachant que la lame de retenue (54) associée est pliée hors de la branche (52) se trouvant radialement à l'intérieur de la section de languette.

28. Dispositif de raccordement selon la revendication 27, **caractérisé en ce que** les sections de languette (47) sont reliées d'un seul tenant dans la zone des sections plates (29) avec la section porteuse (27) de l'élément cage (18).

29. Dispositif de raccordement selon la revendication 27 ou 28, **caractérisé en ce que** les nervures transversales des sections de languette (47) forment des sections d'appui (48) servant à l'appui de l'anneau d'ancrage (19) attaché.

30. Dispositif de raccordement selon la revendication 22 à 24, **caractérisé en ce que** l'anneau d'ancrage (19) est attaché par encliquetage à l'élément cage (18).

31. Dispositif de raccordement selon la revendication 30, **caractérisé en ce que** l'anneau d'ancrage (19) s'enfonce, avec plusieurs languettes de liaison (53) réparties le long de sa périphérie, axialement dans l'élément cage (18), sachant que les languettes de liaison (53) présentent des moyens d'encliquetage (59), par lesquels elles sont en engagement d'encliquetage avec l'élément cage (18).

32. Dispositif de raccordement selon la revendication 31, **caractérisé en ce que** les languettes de liaison (53) traversent respectivement une fenêtre (56) réalisée dans l'élément cage (18) et disposent de saillies d'encliquetage s'éloignant transversalement (59a) qui viennent en prise par encliquetage derrière l'encadrement de la fenêtre (56).

33. Dispositif de raccordement selon la revendication 32, **caractérisé en ce que** les languettes de liaison (53) sont fendues longitudinalement et sont sectionnées par là même en deux branches de languette (60) s'étendant à une distance transversale l'une à côté de l'autre, qui présentent chacune une saillie d'encliquetage (59a).

34. Dispositif de raccordement selon la revendication 32 ou 33, **caractérisé en ce que** les fenêtres (56) sont chacune réalisées dans la nervure transversale se dressant radialement vers l'intérieur d'une section de languette (47) pliée en forme de U de l'élément cage (18).

35. Dispositif de raccordement selon la revendication 34, **caractérisé en ce que** les sections de languette (47) sont reliées dans la zone des sections plates (29) d'un seul tenant avec la section porteuse (27) de l'élément cage (18).

36. Dispositif de raccordement selon la revendication 34 ou 35, **caractérisé en ce que** les nervures transversales des sections de languette (47) forment des sections d'appui (48) servant à l'appui de l'anneau d'ancrage (19) attaché.

37. Dispositif de raccordement selon l'une quelconque des revendications 1 à 36, **caractérisé par** un manchon de desserrage (23) mobile axialement par rapport à l'insert (17), qui pénètre axialement de l'extérieur dans l'insert (17) et présente une section d'alimentation (57) opposée axialement à l'extérieur aux éléments à griffes (33).

38. Dispositif de raccordement selon la revendication 37, **caractérisé en ce que** le manchon de desserrage (23) présente, dans la zone se trouvant dans l'insert (17), une saillie radiale annulaire (63) qui vient en prise radialement derrière la branche (52) se trouvant radialement à l'intérieur des sections de languette (47) pour le support imperdable, sachant qu'il peut être interrompu ou segmenté dans sa direction périphérique.

39. Dispositif de raccordement selon l'une quelconque des revendications 1 à 38, **caractérisé en ce que** l'élément cage (18) présente une interruption (21) à un endroit de sa périphérie.

40. Dispositif de raccordement selon l'une quelconque des revendications 1 à 39, **caractérisé en ce que** le composant porteur (1) est formé par la paroi d'un composant fluidique ou par un corps de boîtier individuel présentant des moyens de raccordement (4).
